Europäisches Patentamt

European Patent Office

Office européen des brevets

(19)

(11) EP 0 408 822 B1

# (12) EUROPEAN PATENT SPECIFICATION

(45) Date of publication and mention
of the grant of the patent:
**03.01.1996 Bulletin 1996/01**

(51) Int Cl.[6]: **G01G 15/00**, G01G 11/00

(21) Application number: **90101408.4**

(22) Date of filing: **24.01.1990**

(54) **Filling apparatus**

Füllapparatur

Dispositif de remplissage

(84) Designated Contracting States:
**AT BE CH DE DK ES FR GB GR IT LI LU NL SE**

(30) Priority: **18.07.1989 JP 185661/89**

(43) Date of publication of application:
**23.01.1991 Bulletin 1991/04**

(73) Proprietor: **Takeda Chemical Industries, Ltd.
Chuo-ku, Osaka (JP)**

(72) Inventors:
• **Morimoto, Shuji
Osaka-shi, Osaka-fu 533 (JP)**
• **Yoshida, Haruhiko
Yodogawa-ku, Osaka-shi, Osaka-fu 532 (JP)**
• **Oi, Masakazu
Toyonaka-shi, Osaka-fu 561 (JP)**
• **Kishimoto, Jotaro
Nishinomiya-shi, Hyogo-ken 662 (JP)**
• **Ohtani, Seiji
Ibaraki-shi, Osaka-fu 567 (JP)**

(74) Representative: **Glawe, Delfs, Moll & Partner
D-80058 München (DE)**

(56) References cited:
EP-A- 0 052 232          EP-A- 0 205 953
EP-A- 0 255 026          EP-A- 0 295 124
FR-A- 2 504 650          GB-A- 2 131 376

• PATENT ABSTRACTS OF JAPAN vol. 15, no. 8 (M-1067)[4536] 9th January 1991, page 76 M 1067 & JP-A-2 258 501
• ANALYTICAL CHEMISTRY vol. 60, no. 11, 1st June 1988, pp. 1142-1145, American Chemical Society, Washington, DC, US; W.A. SCHLIEPER et al.: "Complexometric analysis using an artificial intelligence driven robotic system"
• PROCEEDINGS OF THE 4TH INTERNATIONAL SYMPOSIUM ON INDUSTRIAL ROBOTS, Tokyo, 19th-21st November 1974, pp. 405-428 ; M.S. KONSTANTINOV et al.: "Multi-grippers hot forge manipulator"
• Mettler (CH) TIB from 1984 "Bei Einfluss elektrostatischer Ladungen: Massnahmen zur Vermeidung von Wägefehlern"

**Description**

Background of the Invention

The present invention relates to a filling apparatus for filling containers with an extremely small amount of powder or liquid.

GB-A-2 131 376 shows a manipulator for use with a drop-forging press having several metal forming stations between which work pieces are transferred.

However, such a manipulator for a drop-forging press is not suitable for handling or transferring small containers to be filled automatically.

Conventionally, in a process of filling medicine of this kind, the inspection of the filling amount is executed generally by the methods of the (1) and (2) described hereinafter.

(1) A container filled with powder, liquid or the like is manually taken out of the conveying line so as to weigh it on the balance disposed on the off-line. Thereafter, the contents (powder or the like) are discharged to weigh the empty container so that the filling amount is calculated through the subtraction thereof.

(2) When an automatic discharged weighing apparatus has been disposed on the production line, an empty container which is not filled is drawn out properly for the weighing operation. Thereafter, it is returned onto the line for the filling operation. After the filling operation, it is drawn out again for the weighing operation. After the subtraction thereof, the filling amount is calculated from the subtraction.

When there is difference between the calculated filling amount and the target amount in any of the above-described (1) and (2), it is taken a proper adjustment if the filing amount is executed.

Generally, in the powder filling system, the filling amount varies due to the drifting changes in the hopper level (stock amount) of the bulk, specific volume, matter property and so on. Also, in the filling of the liquid (including suspension agent) or the like, the filling amount varies due to changes in viscosity, clogging of the needle point filter, looseness of the cylinders or the like. Thus, it is necessary to check the above-described filling amount at proper frequencies to adjust the filling amount. However, in the filling process, an abnormal changes in the filling amount may be caused because of unexpected reasons through some trouble in addition to the above-described aging changes. The conventional proper sampling inspections cannot check the abnormal filling amount caused by the unexpected reasons. In the medicine, the conventional sampling weighing operation cannot cope with the problem, because the filling amount must retain an extremely high accuracy and also, defective products must not be provided by any means.

Although all the container weighing operations for weighing the respective filling amount with respect to all the containers may settle the above-described problem, the weighing operations for all the containers are hard to effect in the conventional weighing apparatus, because the productivity is extremely reduced due to slower weighing speed as compared with the filling speed.

Also, in order to weigh a very small amount by the use of an electronic balance, conventionally there are a method of obtaining a weighing value (a balance reference stability detecting method) through an averaging operation with a constant time averaged, conventionally in a stable output mode with a constant number of data being included within the tolerance width, a method of effecting a sampling operation after the elapse of the constant time, and other methods.

The method of obtaining the weighing value by the above-described stable output mode has a disadvantage in that generally more time is too taken to effect the high-speed weighing operation when the high accuracy is required. If the tolerance width is widened to shorten the time, the accuracy becomes worse. In a method of effecting a sampling operation after the lapse of the given time, the accuracy becomes worse if the established time is shortened. Also, more time is taken if the established time is made longer to improve the accuracy, and the unexpected inferior data may be taken in because of noises, vibrations and so on.

Furthermore, when the extremely small measurement of approximately 1 mg or lower in accuracy is effected, magnetic force lines or the like to be caused from temperature changes, controller have bad influences upon the measurement accuracy. When an object to be weighed is an inductive material, static electricity to be caused by frictions or the like has bad influences upon the measurement accuracy. Especially, the bad influences to be caused by the static electricity cannot be removed even if an electronic balance is provided in an air preventing box used conventionally, thus reducing the measurement accuracy by the electronic balance.

In this type of powder filling apparatus, when the filling is continuously effected sequentially into the containers of a given number through the driving of the filling machine after the filling material of a given amount is thrown into the hopper of the filling machine, the fluctuating tendency is large in addition of the respective variation of the filling amount in the initial mode at the start of the filling machine. Also, even in the final mode with the filled becoming smaller in amount, the fluctuating tendency becomes large in the individual variation. Although the least variation is provided in a steady mode between the initial mode and the final mode, there is an drifting fluctuation of gradual increasing · decreasing. The above-described characteristics are provided in the filling amount variation and the fluctuating tendency in accordance with the operation period of the filling machine. Although the controlling property is good when the filling amount is stable in a case where the feedback control operation is effected with the average value of a few filling amount data through all the container weighing operation even if a uniform feedback control is effected from the start time to the stop time, there is a disadvantage in that the feedback cannot follow the fluctuating tendency sufficiently in the initial mode and the final mode with the fluctuating tendency being larger in it. When the feedback controlling operation has been effected one by one to follow the variation in the filling amount of the final mode at the initial stage, the unexpected one bad datum in the stable period of the steady mode may be picked up. Even if all the container weighing operation may be effected in this manner, it is a problem how the feedback controlling operation may be effected in accordance with the weighing result.

## SUMMARY OF THE INVENTION

Accordingly, a first object of the present invention is to provide a filling apparatus equipped with a weighing apparatus, which makes it possible to effect all the container weighing operation, with the reduction in productivity being controlled to a minimum.

According to one preferred embodiment of the present invention, there is a filling apparatus provided with a weighing apparatus, which includes a conveyer for sequentially feeding empty containers a first electronic balance for weighing empty containers to be transported from the conveyer, a filling machine for filling powder or liquid into the containers to be transported from the first electronic balance, a second electronic balance for weighing the filled containers to be transported from the filling machine, a carrying-out machine for carrying out the filled containers weighed by the second electronic balance, a container carrying apparatus provided with a driving mechanism having four chucks mounted in given intervals on a long operation bar so as to effect opening, shutting operations by the air driving, and moving the operation bar in X, Y, Z directions, and is characterized in that one container is grasped respectively by each chuck of the container transporting apparatus to move on the same track so as to move four at one time from the feed conveyer to the first electronic balance, from the first electronic balance to the filling machine, from the filling machine to the second electronic balance, from the second electronic balance to the carrying-out machine, the empty container is weighed and the container filled is weighed during the filling operation into the container, all the container weighing operation is adapted to be weighed.

As an electronic balance is disposed before and after the filling machine in the production line, and a container transporting apparatus capable of transporting four containers at one time is provided, the weighing of the empty container and the weighing of the container filled may be effected by electronic balances after and before the filling machine while the powder is being filled into one container. According to the present apparatus, all the container weighing operation may be effected without reduction in the efficiency of the filling operation.

The present invention is to settle a problem wherein the high accuracy of weighing cannot be effected by the high speed in a weighing apparatus using the electronic balance.

A second object of the present invention is to take in the data for each given constant time to turn the value into the weighing value when the difference between the maximum value of the data and the minimum value thereof has become a established value or lower to improve the accuracy of the weighing value and to make the weighing speed faster, and a conductive cap is covered the container during the weighing operation by the electronic balance to remove the influences by the static electricity for improvement of the weighing accuracy.

An extremely small amount weighting apparatus in the present invention comprises an electronic balance for outputting the weighing data respectively for approximately 0.1 mg or lower in reading limit and approximately 0.2 second or faster (preferably within the range of 0.05 through 0.1 second), a cap composed of a conductor to be covered the container when a container such as vial, ampul or the like is weighed by the electronic balance, and a means for raising, lowering the cap, a transport means for transport-ing the container onto the electronic balance and also, carrying it out after the container has been weighed, a weighing data apparatus for effecting the driving control of the cap raising, lowering means and the container transport-ing means and also, outputting the data as the weighing value when the weighing data to be normally outputted from the electronic balance is sampled, the difference between the maximum value and the minimum value among the continuous sampling data of a given number, for example, the five through thirty sampling data is compared with the predetermined stable detection judgment width, the difference has become the stable detection judgment width or lower.

By the weighing operation with the electronic balance through the use of the above-described weighing data processing apparatus, the time may be shortened and the accuracy may be improved in the comparison with the conventional balance weighing stability detecting method or the like, and the weighing operation, of 1 mg or lower in accuracy, of a nonconductor with static electricity therein may be effected although conventionally impossible.

A third object of the present invention is to control the variation of the filling amount by the feedback controlling operation corresponding to the operation period of the filling machine so as to keep the constant control width of the filling amount.

In order to achieve the above-described object, a filling amount control apparatus is added comprising a first electronic balance for weighing empty containers, a filling machine such as auger filling machine or the like which fills powder or the like with respect to the container after the empty container has been weighed by the use of an auger operated rotatably by a servo-motor of a pulse setting system, a second electronic balance for weighing the filled container, which is adapted to weigh after the filling operation, a carrying apparatus for retaining a container to automatically transport it from a transporting means for empty containers into the first electronic balance, from the first electronic balance to an auger filling machine, from the auger filling machine into the second electronic balance, from the second electronic balance to a detective product rejecting apparatus, data processing apparatus which calculates the net filled amount from the weighed value of the empty container by the first electronic balance and the weighed value of the filled container by the second electronic balance, controls in feedback the driving of the motor of the filling machine through the controlling operation of the rotation moving pulses of the motor from the net filled amount, the target filling amount and the motor driving data (for example, the rotation moving pulses or the like of the motor) of the filling machine when the filled container has been filled, the feedback control is effected for each previous filling results in the initial mode and the final mode of the filling machine large in the fluctuating tendency of the filling amount, and also, the feedback control from the average value of a plurality of continuous times, five times, etc. including the previous time in the steady mode with the fluctuating tendency being small in the filling amount.

According to the filling amount control apparatus, it is possible to effect the feedback control in accordance with the previous weighing data, because a weighing apparatus which is capable of all the container weighing operation is used without the damages to the productivity of the filling process. As the feedback control system varies with the mode being divided into operation modes characterized in the variation of the filling amount and the fluctuation tendency thereof, the feedback control suitable for the respective operation modes may be effected, so that the filling dispersion, the inferior filling may be controlled to a minimum in each mode.

A fourth object of the present invention is to provide an apparatus which stops in emergency the auger when the powder has been clogged into the measuring portion or the like in a case where an auger filling machine is used as a powder filling machine.

In order to achieve the above-described object, there is an emergency stop apparatus for an auger in an auger filling machine which has a cylindrical auger casing mounted at the tip end of the funnel with the powder being accommodated therein, has an auger, secured to a rotary shaft, coupled into the auger casing so as to dispense the powder in weighing in accordance with the rotary angle of the auger to fill it into the container or the like, and which is characterized in that a servo-motor is used as a driving means for rotating the auger through the rotary shaft, the rotation of the auger is adapted to stop, when overtorque has been caused by clogging between the auger casing and the auger, through the provision of a control circuit for stopping the rotation of the servo-motor during the rotation of the servo-motor from the lapse time of the logical rotation time of the servo-motor required for the filling of the given amount powder with respect to one container to a time point when the given abnormality detecting time.

By the use of a servo-motor clear in such a rotation track as described hereinabove as the driving mechanism of the auger, the rotation of the servo-motor does not stop even if the rotation track collapses and the given stop time passes, so that the overtorque caused by the powder clogging may be detected easily. Thus, when the powder clogging has been caused, it may be detected quickly to stop the auger. Accordingly, accidents such as auger failure, screen failure, etc. may be prevented.

BRIEF DESCRIPTION OF THE DRAWINGS

These and other objects and features of the present invention will become apparent from the following description taken in conjunction with the preferred embodiment thereof with reference to the accompanying drawings, in which;

Fig. 1 is a whole perspective view of a filling apparatus in an embodiment of the present invention;
Fig. 2 is a schematic plan view showing an arrangement relation of the main component requirements of the apparatus shown in Fig. 1;
Fig. 3 is a chart showing the movement of chucks 8A through 8D of Fig. 1;
Fig. 4 is a view showing the weighing function in balances 3, 5 of Fig. 1;
Fig. 5 is a sectional view of the essential portions of a powder filling machine;
Fig. 6 is a chart showing the filling function;
Fig, 7 is a block diagram showing the whole control apparatus for the filling apparatus of the present invention;
Fig. 8 is a block diagram of a data processing apparatus for an electronic balance;
Fig. 9 is a flow chart of a data processing apparatus of Fig. 8;
Fig. 10 and Fig. 11 are charts each showing the weighing characteristics of the electronic balance;
Fig. 12 is a chart in a case where the filling amount of the filling machine is feedback-controlled;

Fig. 13 is a chart in a case where the filling amount is not feedback-controlled;

Fig. 14 is a chart showing a rotation track of a servo-motor for rotatably driving the auger of the filling machine; and

Fig. 15 is a partial enlargement chart of a chart shown in Fig. 14 for describing the principle at the abnormality detection time.

## DETAILED DESCRIPTION OF THE INVENTION

Before the description of the present invention proceeds, it is to be noted that like parts are designated by like reference numerals throughout the accompanying drawings.

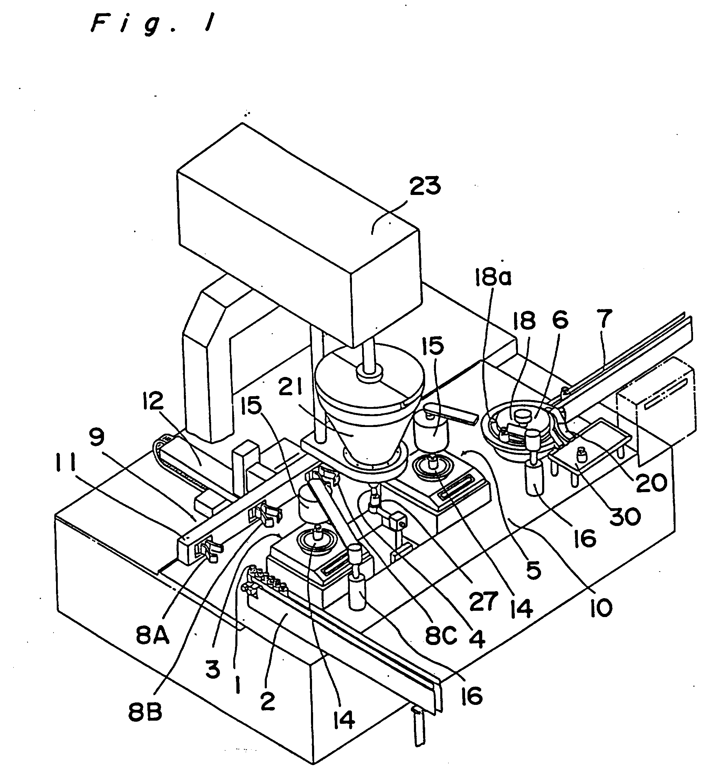

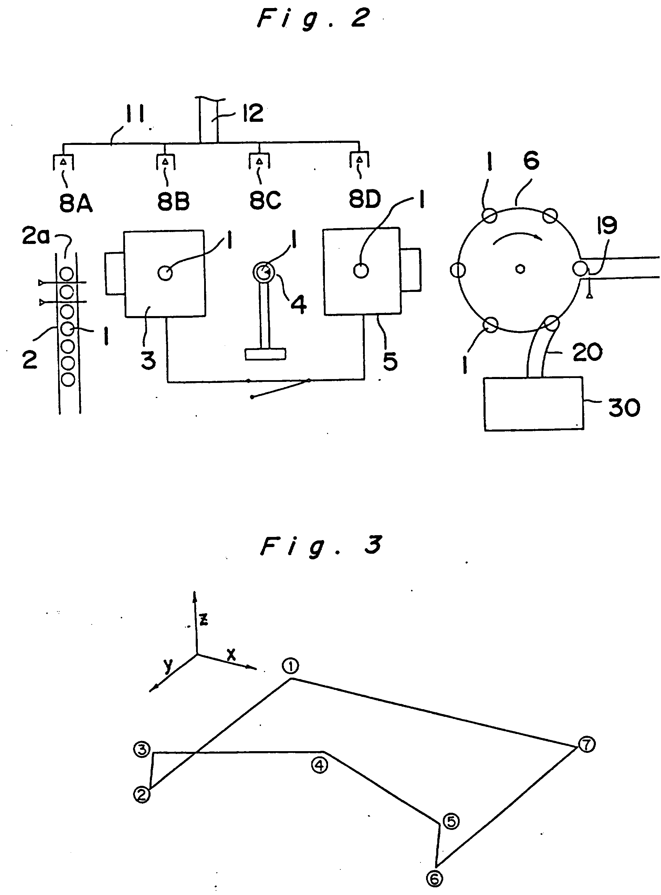

Referring now to the drawings, there is shown in Fig. 1, the whole filling apparatus and in Fig. 2, the construction of a chuck, etc, according to one preferred embodiment of the present invention, which includes vial 1 as a kind of container, a feed conveyer 2 for empty vials, a first electronic balance 3 for weighing the empty vials, a powder filling machine 4 for filling the powder into an empty vial weighed by the first electronic balance 3, a second electronic balance 5 for weighing the vial filled with the powder, a defective product rejecting apparatus 6 for rejecting defective products with the weighed value thereof being deviated from the given control width, a take-out conveyer 7, a container transporting apparatus 9, with a long operation bar 11 mounted on a driving mechanism 12 being disposed on a basic pedestal 10 to transport the vials onto each apparatus, the operation bar having four chucks 8A, 8B, 8C, 8D mounted in the constant intervals as shown.

The feed conveyer 2, the first electronic balance 3, the powder filling machine 4, the second electronic balance 5 and the defective product rejecting apparatus 8 are disposed on the basic pedestal 10 in parallel in the same constant intervals from the right side to the left side in the drawing. The container transporting apparatus 9 for simultaneously moving four chucks 8A through 8D in the directions X, Y, Z has a long operation bar 11 disposed on the basic pedestal 10 through a X, Y, Z driving mechanism 12 as shown, with the same interval being provided as that of the feed conveyer 2 through the detective product rejecting apparatus 6 arranged in parallel on the operation bar 11. According to the construction thereof, respective chucks 8A through 8D are retained on the operation bar 11, circulatingly moves into the positions of (1) → (2) → ... ... (7) → (1), in such track as shown in Fig. 3, by the driving mechanism 12. For example, in the chuck 8A, it moves in the Y-direction with a retreat position (1) corresponding to the feed conveyer 2 being provided as a basic point to retain a vial, with a chuck, positioned at the tip end in the exit 2a (2) of the feed conveyer 2. After it has retained the vial, it moves in the Z-direction to rise into the (3) position and subsequently moves into the X-, Y-direction so as to move into the (4) position with respect to the first electronic balance 3. It moves into the X-, Y-direction likewise from the position. It moves the (5) above the vial setting position of the first electronic balance 3. It moves into the Z-direction from the position to lower. It moves into the vial setting position (6) of the first electronic balance 3 to release the vial 1 in the position from the chuck to place it. Thereafter, the chuck only moves in the Y-direction and retreats. When it reaches the (7) position, it moves into the X-direction to return into the original (1) position. The other chucks 8B, 8C, 8D move on the same track simultaneously with the movement of the chuck 8A. In this manner, transportation to the first electronic balance 3 from the feed conveyer 2 by the chuck 8A, transportation into the powder filling machine 4 from the electronic balance 3 by the chuck 8B, transportation into the second electronic balance 5 from the powder filling machine 4 by the chuck 8C, transportation into the defective product rejecting apparatus 6 from the second electronic balance 5 by the chuck 8D, namely, four transportations are simultaneously effected by one container transporting apparatus 9.

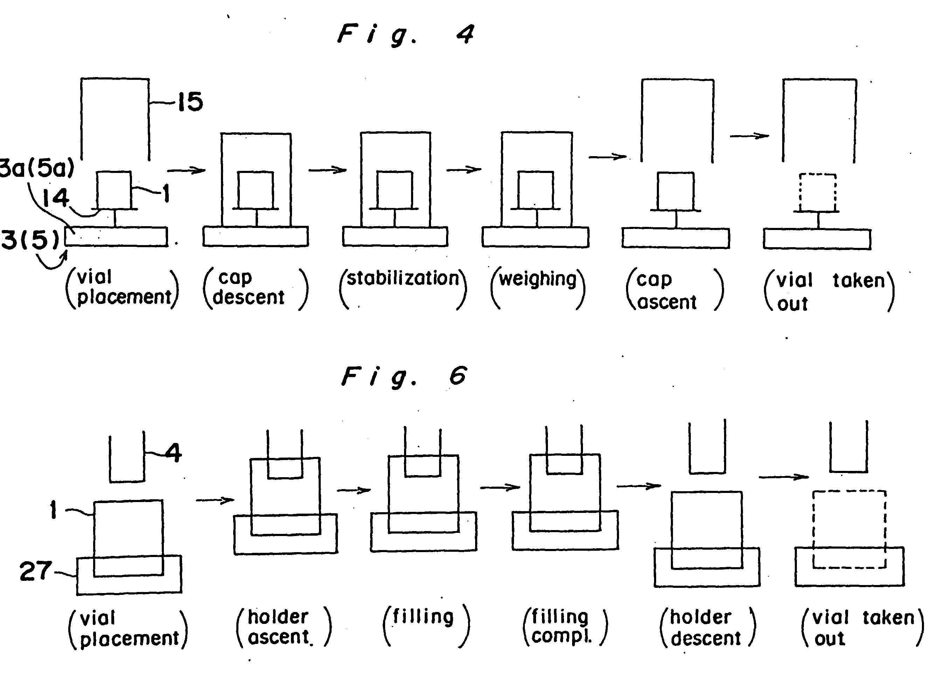

The first electronic balance 3 and the second electronic balance 5 have respectively a weighing plate 14 on the central top face of each of the electronic balance main bodies 3a, 5a, with a metallic cap 15 going vertically by an air cylinder 16 being disposed above the weighing plate 14. The metallic cap 15 made of a conductor is adapted to be put on the vial 1 on the weighing plate 14 during the weighing operation, with the diameter of the lower edge thereof being set larger than the diameter of the weighing plate 14. During the capping operation, it does not come into contact against the weighing plate 14. It is set that the whole lower end face of the cap comes into contact against the electronic balance main bodies 3a, 5a enough to fully shield the vial. The weighing plate 14 and the vial 1 placed on it are isolated by the metallic cap 15 from the outside during the weighing operation, so that the operation of the wind pressure may be prevented and also, the magnetic field with respect to the outside is isolated to prevent the static electric power from being functioned as the outer force onto the weighing plate 14. Thus, the weighing error may be prevented from being caused by the static electricity and the indoor wind during the weighing operation of the extremely small amount, thus ensuring the precise weighing operation. In the weighing by the first and second electronic balances 3, 5, the vial 1 is placed by the chuck onto the weighing plate 14 as shown in Fig. 4, thereafter the metallic cap 15 is lowered to put the cap on the vial 1 and the weighing plate 14 as shown in Fig. 4. Thereafter, after the stabilization thereof for the required time period, the weighing operation is effected. After the weighing operation, the metallic cap 15 is raised so as to draw out the vial 1 by the chuck from the weighing plate 14.

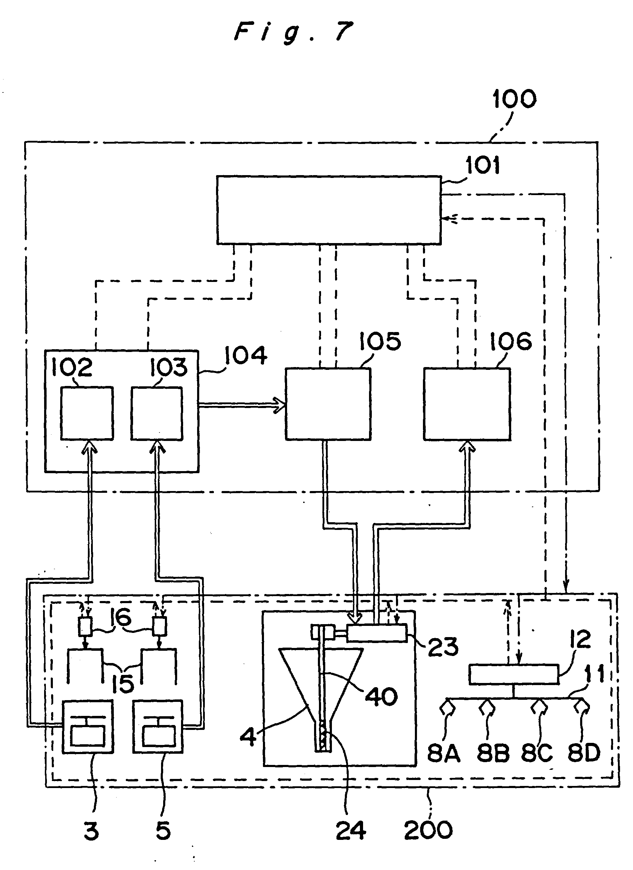

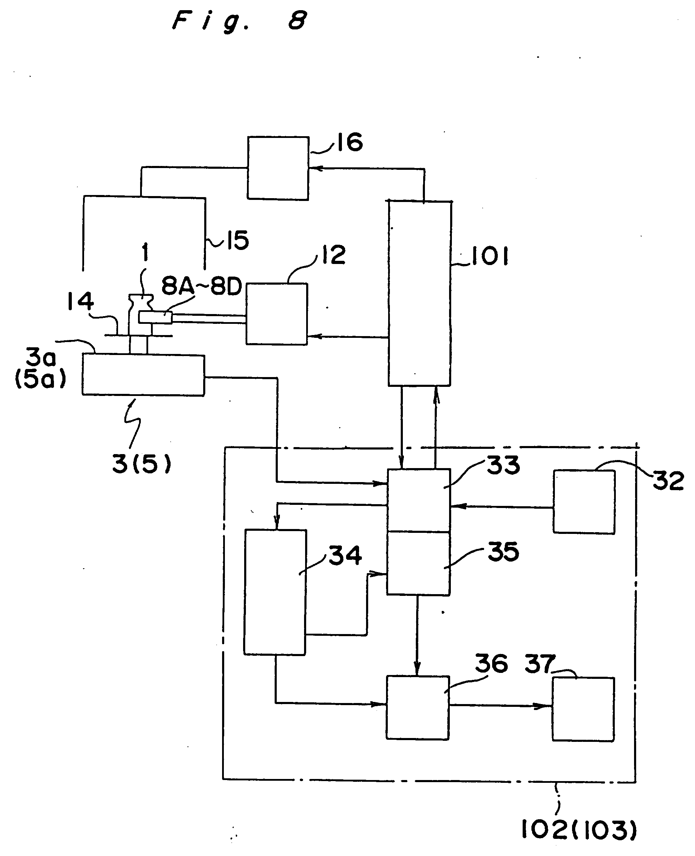

The data of the weighing value of the empty vial 1 weighed by the first electronic balance 3 and the data of the weighing value of the vial 1 after the powder weighed by the second electronic balance 5 has been filled are inputted into the first, second weighing data processing apparatuses 102, 103 shown in Fig. 7 and Fig. 8 to be described later. The powder filling amount is calculated through the subtraction of the output value of the first weighing data processing apparatus 102 from the output value of the second weighing data processing apparatus 103 to output the calculated value from the weighing data processing apparatus 104 for comparing the filling amount with the target value. If it stays beyond the set control width, it is considered as a defective product and is rejected by the defective product rejecting apparatus 6. Namely, as shown in Fig. 1 and Fig. 2, the defective product rejecting apparatus 6 is rotated clockwise as shown in Fig. 2 with the vial 1 being accommodated in a concave portion for accommodating the vial 18a formed at intervals on the outer periphery of the star wheel 18. A take-out conveyer 7 is connectingly provided on the circuit route, with a shutter 19 being mounted on the connecting portion. When the shutter 19 is positioned open, the vial 1 to be carried is adapted to be automatically transported to the take-out conveyer 7. When the shutter 19 is kept closed, it is guided onto a rejecting side passage 20 connectingly provided so that it may be taken out into a defective product receiving portion 30. The shutter 19 is closed when a rejecting signal is outputted from the control apparatus to be described later so as to reject the vial which stays out of the given control width in the filling amount. In the above-described embodiment, the defective product rejecting apparatus 6 is provided in parallel at the same interval as that of the feed conveyer 2, the first electronic balance 3, the powder filling machine 4 and the second electronic balance 5, but a conveyer for effecting only a function of carrying the filling container to the next step or a carrying machine for a star wheel or the like may be provided in a position of the defective product rejecting apparatus 6. In this case, a defective product rejecting apparatus may be provided in a proper position of the carrying route on the downstream side of the carrying machine.

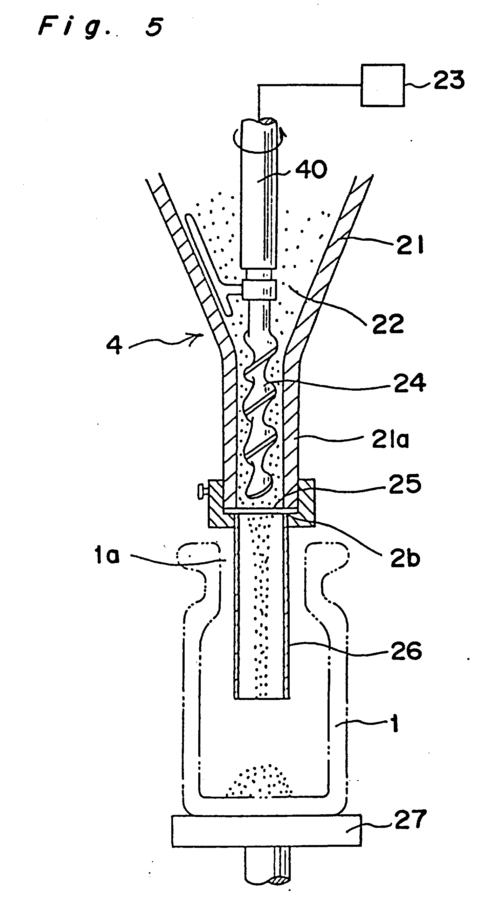

The powder filling machine 4 to be used in the present apparatus uses an auger filling machine as shown in Fig. 5. The powder 22 thrown into the funnel 21 is filled by the given amount into the vial 1 through the screen 25 in accordance with the rotation amount thereof by the auger 24 to be rotated by the driving apparatus 23. In the drawings, a skirt 26 is connectingly provided on the lower portion of the screen 25. The function during the filling operation by the powder filling machine 4 is shown in Fig. 6. After the empty vial 1 has been placed on the holder 27 of the powder filling machine 4 by the chuck 8B, the holder 27 rises so as to have the skirt 26 go into the upper end opening portion 1a of the vial 1. Thereafter, the auger 24 is rotated to fill the powder 22 by the given amount into the vial 1. After the filling completion, the holder 27 is lowered and is returned into a constant position. Then, the vial 1 is taken out by the chuck 8C and is transported onto the next second electronic balance 5. The raising, lowering operations of the holder 27 are also controlled by the program control apparatus 101 of the control apparatus shown in Fig. 7.

As described hereinabove, according to the present device, all the empty vials 1 to be fed from the feed conveyer 2 are first transported onto the first electronic balance 3, where the empty vials are weighed. Then, they are transported onto the powder filling machine 4 so as to be filled with the powder. All the vials filled with the powder are also transported onto the second electronic balance 5. After the weighing operation, they are transported onto the defective product rejecting apparatus 6. The filled vials with the exception of the defective products are transported on the take-out conveyer 7 into the next step. As the weighing operations of the empty vial and the filled vial are effected with respect to all the vials, something wrong with the filling amount which is caused by the unexpected reason may be positively detected.

Four transporting operations from the feed conveyer 2 into the first electronic balance 3, from the first electronic balance 3 into the power filling machine 4, from the powder filling machine 4 into the second electronic balance 5, from the second electronic balance 5 into the defective product rejecting apparatus 6 are simultaneously effected. While the filling operation is effected with respect to one vial, one before and after the vial is weighed before being filled with the powder and after being filled with the powder. Thus, the productivity of the filling operation *is* not interfered with by the weighing, thus allowing all the containers to be weighed efficiently.

The X, Y, Z driving mechanism 12 of the above-described chucks 8A through 8D, a driving apparatus 23 for an auger powder filling machine 4, an air cylinder 16 for raising, lowering the first electronic balance 3 and the second electronic balance 5, a raising, lowering means (not shown) for the holder 27 are controlled by the on, off signals from a program control apparatus 101 within a control apparatus 100 for the whole apparatus shown in Fig. 7. Each driving means such as a shutter 19 or the like for the defective product rejecting apparatus 6 for the filling apparatus shown in Fig. 1 in addition to each of the driving means is controlled by a program controlling apparatus 101.

Also, a data processing apparatus for controlling the filling amount 105 connected with the weighing data processing apparatus 104 is provided within the control apparatus 100. The driving apparatus 23 for the auger filling machine 4 is controlled in feedback by the data processing apparatus 105 to control the filling amount. Furthermore, a processing apparatus 106 for emergency use for the auger filling machine is provided within the control apparatus 100, so that when the powder clogging or the like has been caused in the auger filling machine 4, the auger is stopped in emergency to prevent the breakdown.

In Fig. 7, a double-line arrow mark shows a data signal, a dotted-line arrow mark shows a synchronous signal, an arrow mark of one-dot chained line shows a control signal composed of on, off or the like. The weighing value data signal is inputted into the first, second weighing data processing apparatus from the first, second electronic balances 3, 5 and also the driving signal (pulse signal) is inputted into the processing apparatus 106 from the servo-motor of the driving apparatus 23 of the filling machine 4. A data signal for controlling a pulse rotation driving amount into the filling machine 4 from the data processing apparatus 105 is outputted. Driving control signals of on, off are outputted into each driving apparatus of a filling apparatus (shown in reference character 200 in Fig. 7) shown in Fig. 1 from a program control apparatus 101.

Each processing apparatus which is disposed within the control apparatus 100 will be described hereinafter.

First, weighing data processing apparatuses 102, 103, 104 for improving the accuracy of the weighing amount and increasing higher weighing speed by the electronic balances 3, 5 will be described.

The electronic balance 3, 5 which are 0.1 mg in reading limit are connected with the first, second data processing apparatuses 102, 103 as shown in Fig. 7. A synchronous signal generating apparatus (not shown) for outputting am synchronous signal when the vial 1 is placed on the weigh plate 14 is provided to output with the digital signal the weighing value for each of 0.1 second. The first and second electronic balances 3, 5 effect the zero setting operation at proper intervals.

The first and second weighing data processing apparatuses 102, 103, which are respectively constructions shown in Fig. 8, are adapted to output as the weighing value from the weighing data processing apparatus 104 through subtraction between the output values of both the apparatuses 102 and 103. The first and second weighing data processing apparatuses are provided with the initial setting portion 32, the input data portion 33, the memory portion 34, the stable detection judging portion 35, the weighing value calculating portion 36, the output portion 37 as shown in Fig. 8.

As described hereinabove, the program control apparatus 101 effects the operation control on, off of the driving mechanism 12 for transporting the vial 1 and the air cylinder 16 for raising, lowering the metallic cap 15 and also, outputs into the input data control portion 33 the weigh starting signal after the metallic cap lowers. The initial setting portion 32 sets a repeating counter (1), a temporary maximum value (W max), a temporary minimum value (W mix), a sample data reference numeral (n), a stable detection judging width ($\varepsilon$) so as to input these initial set value into the input data control portion 33. The input data control portion 33 effects the inputting of the output weighing data of the electronic balances 3, 5 and the calculation of the difference (R) of W max, W min. The memory portion 34 stores W (1), W max, W min, R to be inputted from the input data control portion 33, and effects the data shift from W (1) into W (1 - 1), from W (1 - 1) into (1 - 2), ... ... from W3 into W2, from W2 into W1 so as to output the stored data into the stable output judgment portion 35 and the weighing value calculation potion 36. The stable output judgment portion 35 compares the difference R between the maximum weighing value amid the minimum weighing value with the stable detection judging width $\varepsilon$ so as to output for the calculation of the weighing value into the weighing value calculation portion 36 in $R \leq \varepsilon$. In the weighing value calculation portion 36, the weighing value W is calculated from $\Sigma$ Wi/n to output the weighing W into the output portion 37.

The subtraction in the output value between the first weighing data processing apparatus 102 and the second weighing amount data processing apparatus 103 is effected. Namely, the output weighing amount value of the empty container is subtracted from the output weighing amount value of the filled container to output the net powder filling amount from the weighing data processing apparatus 104.

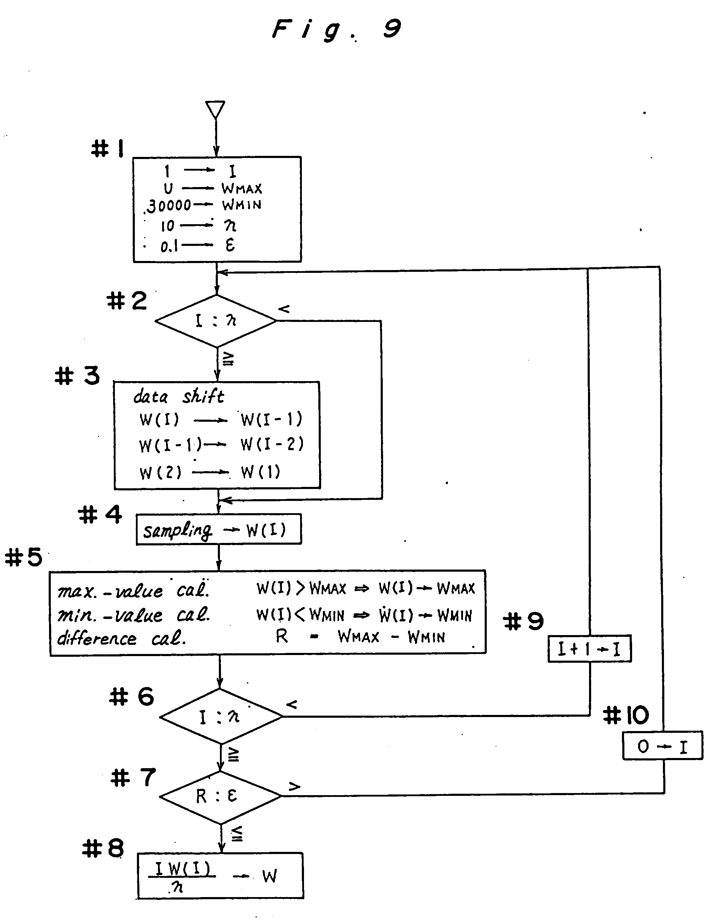

The first , second weighing data processing apparatuses 102, 103 operate in an order shown in the steps # 1 through # 10 of the flow chart of Fig. 9 to calculate the weighing value W. Namely, the initial setting is effected at the step # 1, the count up is judged at the step # 2, the data shift is effected at the step # 3, the data sampling is effected at the step # 4, the difference (R) between the maximum value and the minimum value is calculated at the step # 5, the count up is judged at the step # 6, the comparison between the difference (R) and the stable detection judgment width ($\varepsilon$) is effected at the step # 7, the weighing value W is calculated at the step # 8. The step advances to # 4, skipping the step # 2 when 1 < n at the step # 2. Furthermore, the step advances to the # 9 when 1 < n at the step # 6 to renew the count. The step advances to the step # 10 when R > $\varepsilon$. In the flow chart, the step # 10 is omitted so as to adopt a method of effecting the outputting operation upon stabilization by the data shift. In this case, the weighing value W may be obtained quickly, which is referred to as a high speed type hereinafter. Also, there may be adopted a method of omitting the step # 2 and the step # 3 with the sample data being divided n by n, which is hereinafter referred to as a memory saving type. As described later, the high speed type and the memory saving type are almost similar in the effect in accuracy although the memory saving type is slightly delayed in terms of time as compared with the high speed type.

(Embodiment)

A container (vial) of about 20 g (actual value = 19998.0 mg) was placed on the electronic balance 5. A metallic cap 7 was put on. The weighing data was taken in by the computer to obtain the various data shown in Table 1 given hereinbelow. Each item in the table is set as hereinafter.

\* Time [ 0.1 second ] ... lapse time from immediately before the climb start from 0 in the weighing data.
\* Weigh amount rough data [0.1 mg] ... rough data of the weighing amount fed into a computer in an output mode normally from the electronic balance.

* Difference from the true value ... difference from the true value 19998.0 mg of the container.
* Present invention ... when the weighing has been effected under the control by the present invention with the above-described control apparatus 10 shown in Fig. 8 being provided.

. R for the stable detection judgment of the present invention
(the value of I W max - W min I) ... R when the sample data reference number is eight in n.
. Stable detection value ... average value of the data difference with respect to eight true values when R becomes 0.3 mg, 0.2 mg, 0.1 mg, 0.0 mg.

* Balance reference stable detection method ... when the weighing operation is effected by the conventional stable detecting method, a parameter of the stable detection of the balance is set to a proper value (integrated time 0.8 second, automatic stable detection 0.05 mg).

. Average value ... average value in the integrated time of 0.8 second.
. Difference in average value ... difference with respect to the former average value.

Table I

| time | weighing rough data | dif. from true value | present invention | | balance state detection | |
|---|---|---|---|---|---|---|
| | | | MAX-MIN | | ave. value | dif. in ave. value |
| [0.1sec.] | [0.1mg] | [0.1mg] | R | stable dec.val | [0.8sec.] | [0.8mg] |
| 0 | -28 | -200008 | 13 | | | |
| 1 | 31 | -199949 | 59 | | | |
| 2 | 15553 | -184427 | 15581 | | | |
| 3 | 47027 | -152953 | 47055 | | | |
| 4 | 74178 | -125802 | 74206 | | | |
| 5 | 101197 | -98783 | 101225 | | | |
| 6 | 125795 | -74185 | 125823 | | | |
| 7 | 164140 | -35840 | 164168 | | -62433.0 | |
| 8 | 189294 | -10686 | 189263 | | | |
| 9 | 198371 | -1609 | 182818 | | | |
| 10 | 200373 | 393 | 153346 | | | |
| 11 | 200346 | 366 | 126195 | | | |
| 12 | 200112 | 132 | 99176 | | | |
| 13 | 199993 | 13 | 74578 | | | |
| 14 | 199967 | -13 | 36233 | | 57.50 | 62490.5 |
| 15 | 199969 | -11 | 11079 | | | |
| 16 | 199970 | -10 | 2002 | | | |
| 17 | 199971 | -9 | 406 | | | |
| 18 | 199972 | -8 | 379 | | | |
| 19 | 199974 | -5 | 145 | | | |
| 20 | 199975 | -5 | 26 | | | |
| 21 | 199976 | -4 | 9 | | | |
| 22 | 199977 | -3 | 8 | | -3.50 | 61.00 |
| 23 | 199977 | -3 | 7 | | | |
| 24 | 199977 | -3 | 6 | | | |
| 25 | 199978 | -2 | 6 | | | |
| 26 | 199978 | -2 | 3 | -3.4 | | |

(to be continued)

EP 0 408 822 B1

| | | | | | | |
|---|---|---|---|---|---|---|
| 27 | 199978 | -2 | 3 | | | |
| 28 | 199978 | -2 | 2 | -2.6 | | |
| 29 | 199978 | -2 | 1 | -2.3 | | |
| 30 | 199978 | -2 | 1 | | -1.63 | 1.87 |
| 31 | 199979 | -1 | 1 | | | |
| 32 | 199978 | -2 | 1 | | | |
| 33 | 199979 | -1 | 1 | | | |
| 34 | 199979 | -1 | 1 | | | |
| 35 | 199979 | -1 | 1 | | | |
| 36 | 199979 | -1 | 1 | | | |
| 37 | 199979 | -1 | 1 | | | |
| 38 | 199979 | -1 | 1 | | -1.00 | 0.63 |
| 39 | 199979 | -1 | 1 | | | |
| 40 | 199979 | -1 | 0 | -1.0(high-speed type stable detc) | | |
| 41 | 199979 | -1 | 0 | | | |
| 42 | 199979 | -1 | 0 | -1.0(mem.-type stable detection) | | |
| 43 | 199979 | -1 | 0 | | | |
| 44 | 199979 | -1 | 0 | | | |
| 45 | 199979 | -1 | 0 | | | |
| 46 | 199979 | -1 | 0 | | -1.00 | 0.00 |
| 47 | 199979 | -1 | 0 | | | |
| 48 | 199979 | -1 | 0 | | | |
| 49 | 199979 | -1 | 0 | | | (stable detection) |
| 50 | 199979 | -1 | 0 | | | |
| 51 | 199979 | -1 | 0 | | | |
| 52 | 199979 | -1 | 0 | | | |
| 53 | 199979 | -1 | 0 | | | |
| 54 | 199979 | -1 | 0 | | | |
| 55 | 199979 | -1 | 0 | | -1.00 | 0.00 |
| 56 | 199979 | -1 | 0 | | | |
| 57 | 199979 | -1 | 0 | | | |
| 58 | 199979 | -1 | 0 | | | |
| 59 | 199979 | -1 | 0 | | | |
| 60 | 199979 | -1 | 0 | | | |

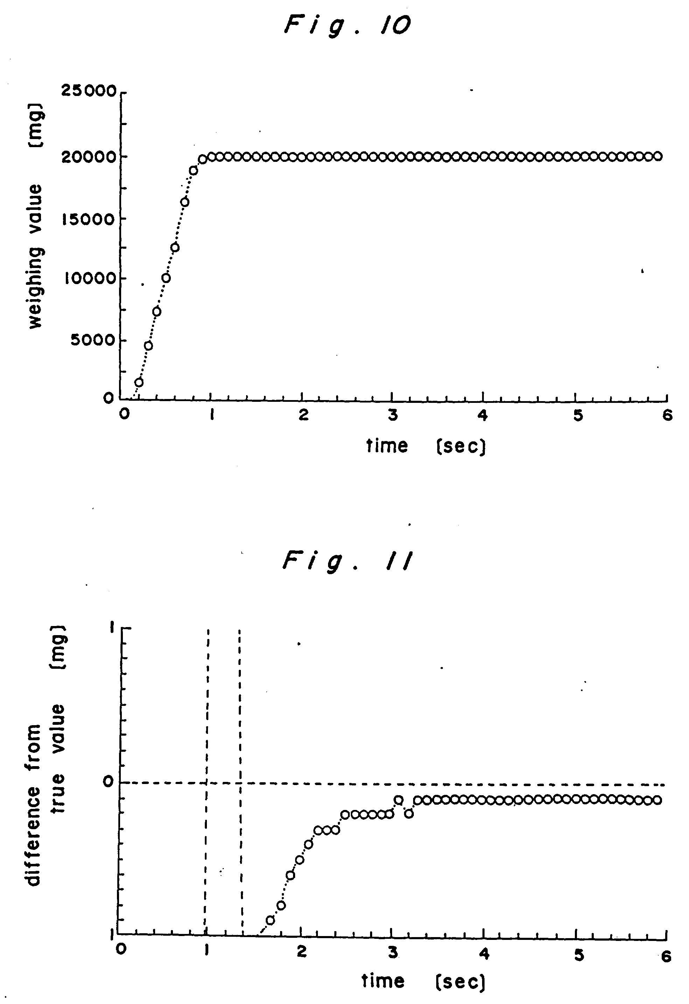

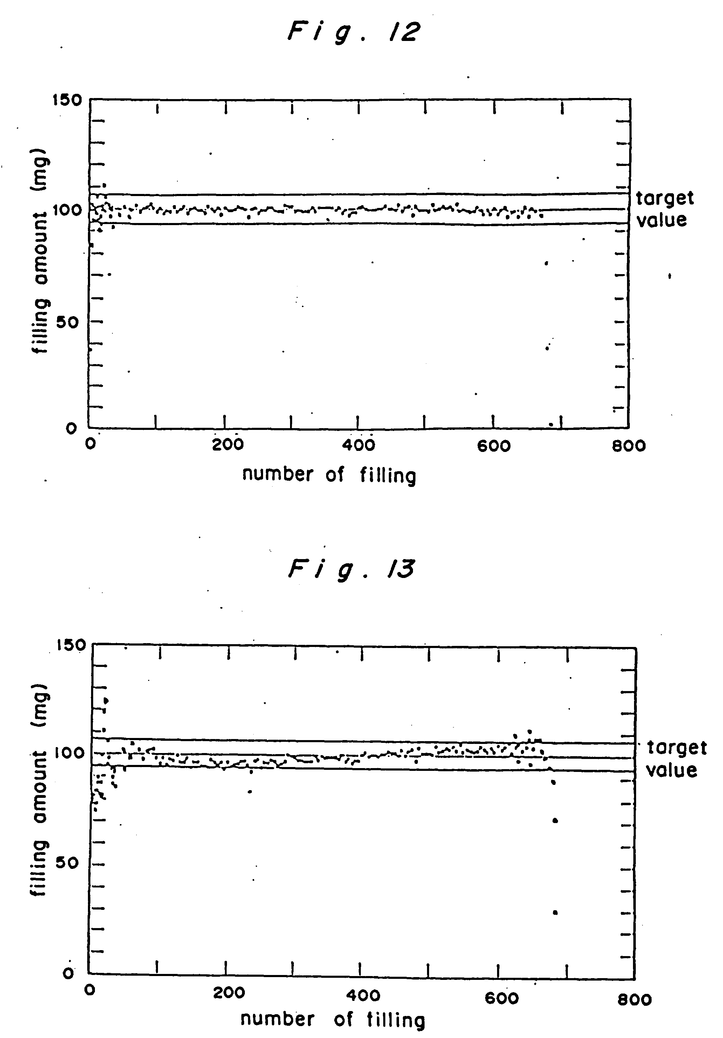

The difference between the weighing amount rough data and the true values described in the Table 1 showing the

10

characteristics of the electronic balances are shown in the charts of Fig. 10 and Fig. 11.

The stable detection judgment width R in the present invention (in the above-described high-speed type) shown in the above-described Table 1 is 0.3 mg, 0.2 mg, 0.1 mg, 0.0 mg, with the difference between the time and the true value, and furthermore the difference between the time and the true value by the conventional balance reference stable detection method being described in Table 2.

Table 2

| stable detection width (mg) | present invention (high-speed type) | | | | bal. stable detec. function. integrated time 0.8 sec. auto. stable detec. 0.05mg |
|---|---|---|---|---|---|
| | 0.3 | 0.2 | 0.1 | 0.0 | |
| time (second) | 2.6 | 2.8 | 2.9 | 4.0 | 5.0 |
| dif.(mg) from true value | 0.34 | 0.26 | 0.23 | 0.10 | 0.10 |

Also, when the data of the repetition of the n = 30 are arranged, the data are as shown in Table 3.

Table 3

| accuracy(dif. from true val. | balance stable detection function | present invention high-speed type | present invention memory saving type |
|---|---|---|---|
| 0.3 (mg) | 3.3 (cec.) | 2.2 (sec.) | 2.4 (sec.) |
| 0.2 | 4.4 | 3.1 | 3.5 |
| 0.1 | 5.3 | 4.2 | 4.6 |

As clear from the above-described experiment results, according to the present invention, about one second may be shortened in the same accuracy as compared with the conventional balance reference stable detecting method (when the accuracy has been defined with the difference from the true value), also the weighing accuracy may be improved by about 0.1 mg when the time is the same stable time.

Especially, in the medical drug manufacturing step with the control reference strict in accuracy being provided, the accuracy is improved, also conventionally one-second reduction of the weighing time with one cycle being five seconds becomes smaller in time by about twenty percent, thus resulting in extremely great effects towards the improvements in productivity because of the higher speed.

As in the present filling apparatus, the weighing is effected with the conductive metallic cap being put on, the bad influences by the static electricity may be removed, thus improving the weighing accuracy even in this point. It is possible to effect the weighing operation, in an accuracy of 1 mg or lower, of a non-conductor having static electricity although it was impossible by the conventional weighing apparatus. Accordingly, when the powder of an extremely small amount is demanded to be filled with the accuracy of 1 mg or lower into a vial made of glass, the present weighing apparatus is used to make it possible to fill in such accuracy as described hereinabove.

In the present filling apparatus, a data processing apparatus 105 for a filling amount controlling use is provided within the control apparatus 100 so as to retain within the given control width the powder filling amount into the vival in accordance with the weighing data from the weighing data processing apparatus 104. The data processing apparatus 105 feedback-controls in accordance with the operation period the auger filling machine to control the filling amount.

As described hereinabove, the auger filling machine 4 shown in Fig. 5 fills by a given amount into the vial container 1 through the screen 25, the skirt 26 in accordance with the rotation amount by the auger 24 to be rotated by the driving apparatus 23. A servo-motor of a pulse setting system is used as a driving apparatus 23 for the auger 24. For example, with respect to one container, the auger 24 is rotated by four rotations with 20000 pulses so that the powder of 100 mg is set to be filled into the container 1.

In the auger filling machine 4, after a given large amount of powder 22 is gotten into the funnel 21 during the powder filling operation, the cover (not shown) is put on the funnel 21 to seal the powder. Under this condition, the servo-motor is started as described hereinabove to intermittently rotate the auger 24. Sequentially the given amount of powder 22 is subdivided, filled with respect to the container 1 to be sequentially transported. When the powder 22 thrown into the funnel 21 is removed, the driving of the servo-motor is stopped so that the given amount of powder is gotten into the funnel 21 again. For example, the powder of 100 mg is adapted to be filled respectively with respect to 1000 containers with one time of powder input portion into the funnel 21.

In the auger filling machine 4, the dispersion of the filling amount is large in the constant period of initial mode from the start time of the servo motor, but in the later steady mode, the dispersion becomes reduced, with in the final mode, the dispersion becoming larger again.

As the dispersion peculiar to the filling amount exists in accordance with the operation mode from the starting time of the auger filling machine 4 to the stop time, the servo-motor for driving the auger 24 is feedback-controlled in accordance with the operation mode, so that the filling amount of the powder 22 into the vial container 1 may be retained within the given control width.

The feedback control effects three feedback controls of the (1), (2), (3) given hereinbelow in accordance with the operation mode of the auger filling machine 4.

(1) Initial mode ... feedback control by n = 1

$$Vn = Vn - 1 \cdot Xs/Xn - 1$$

(2) Steady mode ... feedback control by n = 5

$$Vn = Vn - 1 \cdot Xs/Xav$$

(3) Final mode ... feedback control by n = 1

$$Vn = Vn - 1 \cdot Xs/Xn - 1$$

In the above-described equations,

| | |
|---|---|
| V : | rotation movement amount of the servo-motor. |
| n : | this time. |
| n - 1 : | previous time. |
| Xs : | target filling amount. |
| Xav : | five times' average filling amount. |
| Thus, Vn : | pulse rotation movement amount of this time' servo-motor to be feedback-controlled. |
| Vn - 1 : | pulse rotation movement amount of the previous time's servo-motor. |

The switching from the initial mode into the steady mode, from the steady mode into the final mode is effected when a plurality of continuous ones have reached the reference by the predetermined mode switch reference.

In the feedback control, the initial mode and the final mode are n = 1 as described hereinabove, because the powder filling amount with respect to the respective containers may be provided within the target control width within the initial and the final mode if the servo-motor is feedback-controlled at each time in accordance with the powder filling amount of the previous time as the dispersion of the filling amount is large in these modes.

In the steady mode, the feedback control is effected by the data in a case where the filling amount has been changed by the unexpected reasons when the dispersion of the filling amount is less and the control is effected for each powder filling amount of the previous time, with an inconvenience that the filling amount after the controlling operation has been effected does not go into the target control width. Thus, the steady mode is n = 5. The feedback control is effected from the average value of five-time portion filled previously.

In the filling apparatus shown in Fig. 1, a container whose net weight is calculated by the data processing apparatus after the weighing has been effected by the second electronic balance 5 with respect to the container to be filled by the auger filling machine 4 becomes a container of the time before the previous time, so that all the (n - 1) of the previous equation become (n - 2).

As shown in Fig. 7, the feedback control concretely inputs into the data processing apparatus 105 as a data signal the net filling amount to be outputted from the weighing data processing apparatus 104 through the subtraction processing of the weighing data of the first electronic balance 3 and the second electronic balance 5. In accordance with the data signal inputted, the judgment processing is effected by the data processing apparatus 105 so as to output into the servo-motor the data signal for the controlling the pulse rotation movement amount of the servo- motor of the auger filling machine 4. The on, off control for driving and stopping the servo-motor itself is effected by the control signal from the program control apparatus 101.

(EXPERIMENT EXAMPLE)

Experiments were effected in a control system of the present invention for effecting the feedback controlling operation in the initial mode, the steady mode, the final mode, in a case where the servo-motor has been driven with the constant pulses without the feedback control being effected, in a case where the feedback control has been effected with n = 1 and n = 5 through the whole without the division into the operation modes from the start time till the stop time.

In the present experiment, the number of the filling operations is 700, the target filling amount is 100 mg, the inferior reference is set into ± 7 %.

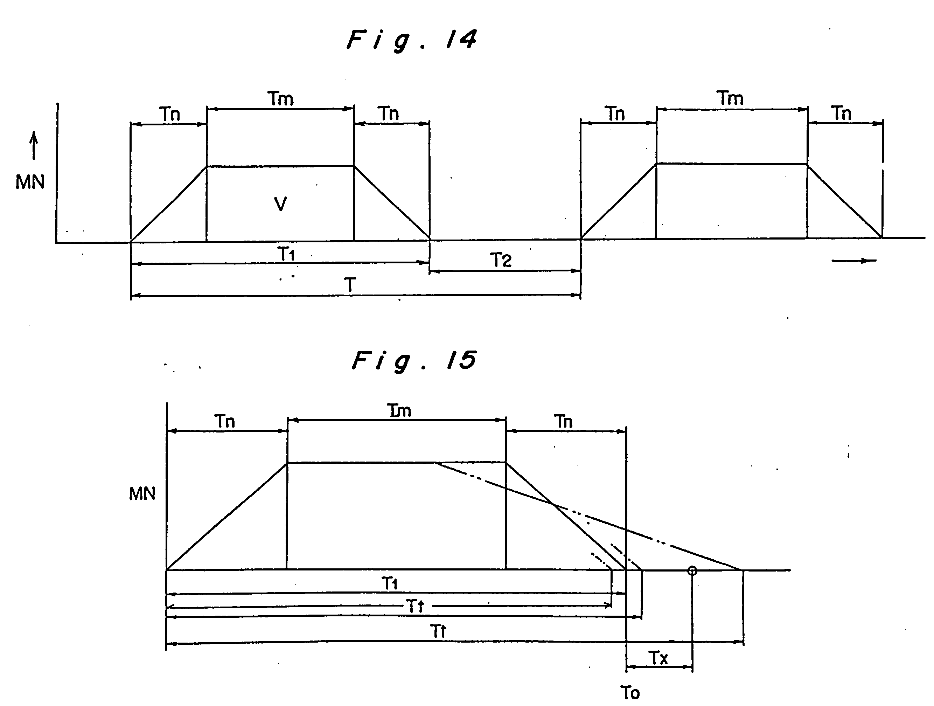

The above-described results are shown in Fig. 4 in the next page. When the feedback controlling operation of the present invention has been effected, the result is shown in Fig. 12. Without the feedback control, the result is shown in the graph of Fig. 13.

Table 4

| | no control constant pulse | control exists feedback in n=1 | control exists feedback in n=5 | control exists feedback in n=1, n=5, n=1 (presen invention) |
|---|---|---|---|---|
| C V | 4.5 % | 2.5 % | 1.7 % | 1.5 % |
| number of defective products | 62 | 11 | 25 | 8 |

In the present invention, the feedback control of the servo-motor for the auger driving use in accordance with the all the weighing operations are effected, and also, the feedback controlling method is changed in accordance with the initial period, the steady period, the final period and the operation mode, so that the feedback controlling operation suitable for each mode may be effected. Thus, the filling accuracy may be increased through the whole and also, the defective products whose filling amount is out of the control width may be prevented from being produced to the utmost.

In the present invention, a processing apparatus 106 for emergency stop use of the auger filling machine is provided within the control apparatus 100. When the powder is clogged between the the inner wall of the cylindrical casing 21a of the measuring portion of the auger filling machine 4 and the auger 24 or the rotation of the auger 24 is gradually difficult to be effected because of the clogging or the like of the screen 25 established on the lower end opening of the measuring portion, the emergency stop processing apparatus 106 effects emergency stops of the auger 24 and all the driving mechanisms to be used for the filling apparatus 200 shown in Fig. 1.

Namely, as described hereinabove, the auger filling machine 4 fills a constant amount of powder 22 into a vial container 1 disposed below through the screen 25 by the rotation driving operation, by a given angle, of the rotary shaft 40 by the servo-motor of the driving apparatus 23 to rotate the auger 25 through operative cooperation thereof during the powder filling operation into the container. After the filling of the constant amount powder 22 with respect to one vial container 1, the rotation of the rotary shaft 40 and the auger 24 is stopped until the next vial container 1 is transported into a filling position and is fixed, and intermittent rotation, and rotation stop are repeated.

The operation conditions of the servo-motor of the driving apparatus 23 are determined by the set values of rotary speed (MN), adjustable speed time (Tn), rotation movement amount (V), rotation period time (T). In the present filling machine, the relationship between the rotation speed and the time is set to be shown in the track of Fig. 14.

In the drawing, the rotation period T is composed of a rotation time $T_1$ of the servo-motor for filling the powder of the constant amount into one vial container and a rotation stop time $T_2$ till the filling start into the next container after the filling completion.

$$(T = T_1 + T_2)$$

During the above-described rotation time $T_1$, the adjustable speed time Tn in the rotation initial period and the rotation final period is the same, and the rotation speed is adapted to decrease and increase in the rotation speed. The time Tm constant in the rotation speed between the acceleration and the deceleration is also made constant, and the rotation speed in the rotation time $T_1$ is controlled to take a definite track as shown.

The servo-motor to be operated in the above-described operation conditions is operated with such a correct track as the track shown in Fig. 14 in the relationship between the time and the rotation speed while the rotary shaft 40 and the auger 24 normally operates in the auger filling machine without abnormality. However, in the auger filling machine, the powder 22 is clogged in the gap between the auger casing 21a and the auger 24, or the screen 26 disposed in the lower end opening of the measuring portion is clogged to apply the overtorque upon the rotation of the auger 24, so that the track shown in Fig. 14 comes out of shape. When something goes wrong with the auger filling machine, the operation of the servo-motor does not follow the track correctly as shown in Fig. 14. By the detection of the collapse of the track, abnormality with the auger filling machine is quickly detected, so that the auger 24 may be stopped before the auger 24 or the screen 25 may be damaged.

In the present invention, when abnormality such as powder clogging or the like has been caused in the auger filling machine 4, the abnormality is detected as the servo motor does not stop even after the lapse of the rotation time.

However, even when nothing wrong is caused in the auger filling machine in the actual rotation, some deviations and time measurement errors are caused as shown in one-dot chain lines of Fig. 15 during the rotation stop, so that the logical rotation total time $T_1$ is different from the actual rotation total time Tt (start signal - actual stop), causing shift between the theory and the fact. When the shift is at a certain value or lower, it is due to the deviations during the mere rotation stop, but when the shift has reached a certain value or higher as shown in a two-dot chain line in Fig. 15, it is due to the overtorque caused by the powder clogging. Thus, the shift between the logical rotation total time and the actual rotation total time exceeds a constant value (abnormality detecting time) Tx is exceeded, the servo-motor is adapted to come to a stop. The abnormality detecting time Tx does not exceed the rotation stop time $T_2$ from the logical stop time $T_0$ to the start of the rotation of the next period, and is stipulated for within $Tx < T_2$.

In order to emergency-stop the servo-motor, the detection signal from the servo-motor rotation detecting means (not shown) is inputted into the processing apparatus for emergency stop use 106 of the control apparatus 100 shown in Fig. 7 to judge whether or not the shift between the logical rotation total time and the actual rotation time exceeds the constant value Tx. When the shift exceeds the Tx, the signal for emergency stop use is adapted to output into the program control apparatus 101.

The servo-motor rotation detecting means which detects the rotation of the servo-motor if the abnormality detecting time Tx lapses from the logical rotation time $T_1$ is adapted to output the servo-motor stop signal into the program control apparatus 101 when the output signal is on at a Tx lapse time point, in the rotation speed of 10 % or more, using a signal outputting, for example, with respect to the maximum rotation speed. Or the detecting means is adapted to output a servo-motor stop signal as an abnormality caused when the signal is on at the Tx lapse time point of the abnormality time by the use of a signal (positioning completion signal) to be outputted when the waiting pulse of the deviation counter has become a set value or lower.

When receiving the emergency stop signal, the program control apparatus 101 outputs a stop signal to the driving apparatus 23 of the servo-motor and simultaneously, outputs a stop signal to all the other driving means of the filling apparatus 200 shown in Fig. 1 to stop them.

As described hereinabove, the servo-motor is used as a driving means for the auger 24 and also, the emergency stop means is disposed. The rotation of the auger may be automatically stopped when the overtorque is applied upon the rotation of the auger 24 by the clogging of the powder 22 between the auger 24 and the auger casing 21a or the screen-eye clogging, etc., and the rotation continues if the servo-motor passes the given logical rotation time $T_1$ and passes the abnormality detecting time Tx.

## Claims

1. A filling apparatus for filling containers with an extremely small amount of powder or liquid, comprising:

    a delivery station (2) to which empty containers (1) are fed by a supply conveyor;
    a first electronic balance (3) for weighing empty containers sequentially transported thereto by from said delivery station;
    a filling machine (4) for filling a material into the containers (1) transported thereto from said first electronic balance;
    a second electronic balance (5) for weighing filled containers transported thereto from said filling machine;
    a further delivery station (6,7) to which filled containers which have been weighed by said second electronic balance are transported for being taken out by a take-out means;
    a container transportation means (9) having an operation member (11) having at least four container grasping chucks (8A-D) thereon for grasping a container therein for being transported by said transportation means; and operation member drive means (12) for driving said operation member to move said at least four chucks (8A-D) into positions to simultaneously grasp a container in each of the respective delivery station, first electronic balance, filling machine and second electronic balance, and thereafter by movement of said operation member, simultaneously transfer an empty container from said delivery station (2) to said first electronic balance (3), an empty container from said first electronic balance (3) to said filling machine (4), a filled container from said filling machine (4) to said second electronic balance (5), and a weighed filled container from said second electronic balance to said further delivery station (6,7).

2. The filling apparatus as defined in claim 1, wherein the delivery station (6,7) has a defective-product rejecting apparatus (6) which rejects a filled container (1) from the transporting route when the filling amount calculated by the weighing value between the first electronic balance (3) and the second electronic balance (5) is out of a given control width.

3. A filling apparatus as defined in claim 1, wherein the container is a vial, ampul or the like and the filling material to be filled into the containers (1) is an amount of 50 mg, 100 mg or the like.

4. The filling apparatus as defined in any of claims 1 to 3, wherein the delivery station (2), the first electronic balance (3), the powder filling machine (4), the second electronic balance (5) and the defective product rejecting apparatus (6) are disposed in parallel arrangement in the same constant intervals on the basic pedestal, four chucks (8A-8D) are mounted on a long operation bar (11) in the same constant intervals as those as described hereinabove, four containers (1) are moved at one time through the movement on the same track in the X, Y, Z directions by a driving mechanism (12) through the operation bar (11).

5. The filling apparatus as defined in any of claims 1 to 4, wherein in the first electronic balance (3) and the second electronic balance (5), a metallic cap (15) is provided for its free vertical operation, by a driving means (16), above a weighing plate (14), when the empty container (1) and the container filled with the powder are weighed, the metallic cap (15) is lowered to cover the cap so as to cover the container (1) and weighing plate (14) itself placed on the weighing plate.

6. The filling apparatus as defined in any of claims 1 to 5, wherein the first electronic balance (3) and the second electronic balance (5) output the weighing data for each of approximately 0.1 mg or lower in reading limit, and approximately at every 0.2 second at the largest.

7. The filling apparatus as defined in any of claims 1 to 6, further comprising a data processing apparatus (100) which samples the weighing data to be normally outputted from the first electronic balance (3) and the second electronic balance (5), compares the difference between the maximum value and the minimum value of the given continuous number of sampling data with the predetermined stable defective judging value so as to output as the weighing value the data when the difference has become the stable detection judgement width or lower.

8. The filling apparatus as defined in any of claims 1 to 7, further comprising a data processing apparatus (105,106) which calculates the net filling amount from the weighing value of the empty container by the first electronic balance (3) and the weighing value of the filled container by the second electronic balance value (5), feedback-controls the driving of the motor (23) of the filling machine from the net filling amount, the target filling amount and the motor driving data of the filling machine during the filling operation, feedback-controls for each data of the previous time at the initial time and the final time with much variation being provided in the filling amount and also, feedback-controls from the average data of a plurality of continous times such as five times or the like including the previous time in the steady period with less variation in the filling amount between the initial period and the final period.

9. The filling apparatus as defined in any of claims 1 to 8, wherein an auger filling machine, which has a cylindrical auger casing (21) mounted on the tip end of the tunnel for accommodating the powder, has an auger (24) secured onto the rotary shaft (40), coupled within the auger casing (21) so as to dispense the powder in weighing in accordance with the rotary angle of the auger (24) is used as the filling machine.

10. The filling apparatus as defined in claim 9, wherein a servo-motor (23) is used as a driving means for rotating an auger (24) through a rotary shaft (40) of the auger filling machine, and an auger emergency stop mechanism which is provided with a control circuit for stopping the rotation of the servo-motor (23) during the rotation of the servo-motor at a time point when the given abnormal detecting time has elapsed from the lapse time of the given abnormality detection time from the logical rotation time of the servo-motor (23) required for the given amount powder to be filled into one container.

11. The filling apparatus as defined in any of claims 1 to 10, wherein the defective product rejecting apparatus (6,7) has a concave portion (18a) for receiving a container in intervals on the outer peripheral portion of a star wheel (18) rotating in one direction, a take-out conveyer (7) is connectingly provided on the rotation route of the star wheel (18), a shutter (19) is provided in the connecting portion, a rejecting side passage (20) is provided connectingly in the downstream position of the rotation route of the star wheel (18) from the shutter mounting portion, and the shutter is closed when the defective product rejecting signal has been outputted so as to reject into the rejecting passage a container which is in the filling amount.

**Patentansprüche**

1. Füllapparat zum Füllen von Behältern mit einer extrem kleinen Menge Pulver oder Flüssigkeit, mit:

einer Zulieferstation (2), der über ein Förderband leere Behälter (1) zugeführt werden,
einer ersten elektronischen Waage (3) zum Wiegen der nacheinander von der Zulieferstation zugeführten, leeren Behälter;

einer Füllmaschine (4) zum Einfüllen eines Materials in die von der ersten elektronischen Waage zugeführten Behälter (1);

einer zweiten elektronischen Waage (5) zum Wiegen der von der Füllmaschine (4) zugeführten, gefüllten Behälter;

einer weiteren Zulieferstation (6, 7), der die von der zweiten elektronischen Waage gewogenen, gefüllten Behälter zugeführt werden, um von Herausnahmemitteln herausgenommen zu werden;

einer Behältertransporteinrichtung (9) mit einem Betätigungselement (11) mit wenigstens vier Behälter-Greifklemmen (8A-B) zum Ergreifen eines Behälters, damit dieser von der Transporteinrichtung transportiert wird, und

einer Betätigungselement-Antriebseinrichtung (12) zum Antreiben des Betätigungselementes, um die wenigstens vier Klemmen (8A-D) in Positionen zu fahren, in welchen sie gleichzeitig jeweils an der Zulieferstation, an der ersten elektronischen Waage, der Füllmaschine (4) und an der zweiten elektronischen Waage einen Behälter greifen, um danach mittels der Bewegung des Betätigungselementes gleichzeitig einen leeren Behälter von der Zulieferstation (2) zur ersten elektronischen Waage (3), einen leeren Behälter von der ersten elektronischen Waage (3) zur Füllmaschine (4), einen gefüllten Behälter von der Füllmaschine (4) zur zweiten elektronischen Waage (5) und einen gewogenen, gefüllten Behälter von der zweiten elektronischen Waage zur weiteren Zulieferstation (6, 7) zu transportieren.

2. Füllapparat nach Anspruch 1,
wobei die Zulieferstation (6, 7) einen Ausschuß-Aussortierapparat (6) hat, der einen gefüllten Behälter (1) aus dem Transportweg nimmt, wenn die Füllmenge, die aus dem Wiegeergebnis der ersten elektronischen Waage (3) und der zweiten elektronischen Waage (5) errechnet wird, außerhalb eines vorgegebenen Steuerbereich liegt.

3. Füllapparat nach Anspruch 1,
wobei der Behälter ein Glasfläschchen, eine Ampulle od. dgl. ist, und das Füllmaterial, welches in die Behälter (1) eingefüllt wird, eine Menge von 50 mg, 100 mg od. dgl. ist.

4. Füllapparat nach einem der Ansprüche 1 bis 3,
wobei die Zulieferstation (2), die erste elektronische Waage (3), die Pulverfüllmaschine (4), die zweite elektronische Waage (5) und der Ausschuß-Aussortierapparat (6) parallel mit jeweils gleichen Abständen zueinander auf einem Grundgestell angeordnet sind, entlang einer langen Betätigungsstange (11) entsprechend der vorstehend beschriebenen Abstände in jeweils gleichen Abständen zueinander vier Klauen (8A-D) befestigt sind, und mittels der Bewegung durch einen Antriebsmechanismus (12) in der gleichen Spur in X-, Y-, Z-Richtungen vier Behälter (1) auf einmal durch die Betätigungsstange (11) bewegt werden.

5. Füllapparat nach einem der Ansprüche 1 bis 4,
wobei in der ersten elektronischen Waage (3) und der zweiten elektronischen Waage (5) oberhalb einer Waagenplatte (14) eine Metallkappe (15) für eine freie, vertikale Betätigung mittels einer Antriebseinrichtung (16) vorgesehen ist, wobei, wenn der leere Behälter (1) und der mit Pulver gefüllte Behälter gewogen werden, die Metallkappe (15) so abgesenkt wird, daß sie den auf der Waagenplatte plazierten Behälter (1) und die Waagenplatte (14) selbst abdeckt.

6. Füllapparat nach einem der Ansprüche 1 bis 5,
wobei die erste elektronische Waage (3) und die zweite elektronische Waage (5) die Wiegedaten in einer Ablesetoleranz von jeweils ungefähr 0,1 mg oder weniger und ungefähr maximal alle 0,2 sec ausgeben.

7. Füllapparat nach einem der Ansprüche 1 bis 6,
weiterhin mit einem datenverarbeitenden Apparat (100), der die normalerweise an der ersten elektronischen Waage (3) und der zweiten elektronischen Waage (5) ausgegebenen Wiegedaten abtastet und die Differenz zwischen dem größten Wert und dem kleinsten Wert der gegebenen, fortlaufenden Anzahl von Abtastdaten mit dem vorbestimmten, stabilen Ausschuß-entscheidenden Wert vergleicht, um die Daten als Wiegewert auszugeben, wenn die Differenz gleich der stabilen Detektions-Entscheidungsbreite oder niedriger geworden ist.

8. Füllapparat nach einem der Ansprüche 1 bis 7,
weiterhin mit einem Datenverarbeitungsapparat (105, 106), der die Nettofüllmenge aus dem Gewicht des leeren Behälters, gewogen von der ersten elektronischen Waage und dem Gewicht des gefüllten Behälters, gewogen von der zweiten elektronischen Waage, errechnet, den Antrieb des Motors (23) der Füllmaschine ausgehend von der Nettofüllmenge, der Zielfüllmenge und den Motorantriebsdaten der Füllmaschine während des Füllbetriebs selbständig steuert, von jedem Wert des letzten Mals ausgehend, am Anfangszeitpunkt und Endzeitpunkt selbsttätig steuert, wenn eine großer Variation der Füllmenge vorgesehen ist, und ausgehend von dem Mittelwert einer Vielzahl von fortlaufenden Malen, beispielsweise fünf mal od. dgl., einschließlich dem letzten Mal, bei dem ein stetiger Betrieb mit weniger Veränderung der Füllmenge zwischen Anfangszeitraum und Endzeitraum auftrat, selbsttätig steuert.

9. Füllapparat nach einem der Ansprüche 1 bis 8,
wobei eine Schneckenförder-Füllmaschine, als Füllmaschine verwendet wird, die ein zylindrisches Schneckengehäuse (21), das am unteren Ende des Tunnels zur Aufnahme des Pulvers befestigt ist, und eine Förderschnecke (24) aufweist, die an der Rotationsachse (40) befestigt ist, welche innerhalb des Schneckengehäuses (21) gekoppelt ist, um das Pulvergewicht gemäß dem Rotationswinkel der Förderschnecke (24) freizugeben.

10. Füllapparat nach Anspruch 9,
wobei ein Servomotor (23) als Antriebseinrichtung zum Drehen einer Förderschnecke (24) über die Rotationsachse (40) der Schneckenförder-Füllmaschine verwendet wird, und ein Schnecken-Notstopp-Mechanismus, der mit einer Steuerschaltung zum Stoppen der Rotation des Servomotors (23) während der Rotation des Servomotors versehen ist, und zwar zu einem Zeitpunkt, zu dem die gegebene anomale Detektionszeit abgelaufen ist, ausgehend von der Ablaufzeit der vorgegebenen anomalen Detektionszeit von der logischen Rotationszeit des Servomotors (23), die für die vorgegebene Menge Pulver, die in dem Behälter eingefüllt werden soll, erforderlich ist.

11. Füllapparat nach einem der Ansprüche 1 bis 10,
wobei der Ausschuß-Aussortierapparat (6, 7) einen konkaven Abschnitt (18a) zum Aufnehmen eines Behälters in Intervallen am Außenumfang einer Sternscheibe (18), die in eine Richtung dreht, hat, wobei ein Herausführ-Förderband (7) an den Rotationsweg der Rastscheibe (18) anschließend, vorgesehen ist, ein Verschluß (19) im Anschlußteil vorgesehen ist, und ein Aussortierseitendurchgang (20) angeschlossen ist an stromabwärts von dem Verschluß liegender Stelle des Rotationsweges der Sternscheibe (18), und der Verschluß geschlossen wird, wenn das Ausschuß-Aussortiersignal ausgegeben worden ist, um in den Aussortierdurchgang einen Behälter auszusortieren, der außerhalb des Steuerbereiches in der Füllmenge liegt.

## Revendications

1. Dispositif de remplissage pour remplir des conteneurs d'une quantité extrêmement faible de poudre ou de liquide, comprenant :

   - une station de distribution (2) à laquelle sont amenés des conteneurs vides (1) par un transporteur d'alimentation ;
   - une première balance électronique (3) pour peser des conteneurs vides transportés à celle-ci en séquence depuis ladite station de distribution ;
   - une machine de remplissage (4) pour remplir un matériau dans les conteneurs (1) transportés à celle-ci depuis ladite première balance électronique ;
   - une seconde balance électronique (5) pour peser des conteneurs remplis transportés à celle-ci depuis ladite machine de remplissage ;
   - une autre station de distribution (6, 7) à laquelle sont transportés les conteneurs remplis qui ont été pesés par ladite seconde balance électronique, afin qu'ils soient enlevés par des organes d'enlèvement ;
   - un dispositif de transport (9) pour les conteneurs, comprenant un élément fonctionnel (11) présentant au moins quatre éléments de saisie de conteneur (8A-8D) pour saisir un conteneur afin de le transporter par ledit dispositif de transport ; et
   - un organe d'entraînement (12) de l'élément fonctionnel pour entraîner ledit élément fonctionnel afin de déplacer lesdits quatre éléments de saisie (8A-8D) dans des positions pour saisir simultanément un conteneur dans chacune des positions respectives à la station de distribution, à la première balance électronique, à la machine de remplissage et à la seconde balance électronique, et de transférer ensuite simultanément, par déplacement dudit élément fonctionnel, un conteneur vide depuis ladite station de distribution (2) jusqu'à ladite première balance électronique (3), un conteneur vide depuis ladite première balance électronique (3) jusqu'à ladite machine de remplissage (4), un conteneur rempli depuis ladite machine de remplissage (4) jusqu'à ladite seconde balance électronique (5), et un conteneur rempli pesé depuis ladite seconde balance électronique jusqu'à l'autre station de distribution (6, 7).

2. Dispositif de remplissage selon la revendication 1, dans lequel la station de distribution (6, 7) possède un dispositif de rejet de produits défectueux (6), qui rejette un conteneur rempli (1) de la voie de transport lorsque la quantité remplie calculée à partir de la valeur de pesage entre la première balance électronique (3) et la seconde balance électronique (5) est extérieure à une plage de contrôle donnée.

3. Dispositif de remplissage selon la revendication 1, dans lequel le conteneur est un flacon, une ampoule ou similaire, et le matériau de remplissage à remplir dans les conteneurs (1) est une quantité de 50 mg, de 100 mg, ou similaire.

4. Dispositif de remplissage selon l'une quelconque des revendications 1 à 3, dans lequel la station de distribution (2), la première balance électronique (3), la machine de remplissage de poudre (4), la seconde balance électronique (5) et le dispositif de rejet de produits défectueux (6) sont disposés suivant un agencement parallèle dans les mêmes intervalles constants sur le socle de base, quatre éléments de saisie (8A-8D) étant montés sur une longue tige fonctionnelle (11) dans les mêmes intervalles constants que ceux décrits ci-dessus, quatre conteneurs (1) étant déplacés simultanément par le déplacement sur la même voie en directions X, Y, Z par un mécanisme d'entraînement (12) au moyen de la tige fonctionnelle (11).

5. Dispositif de remplissage selon l'une quelconque des revendications 1 à 4, dans lequel un capuchon métallique (15) est prévu dans la première balance électronique (3) et dans la seconde balance électronique (5), pour son fonctionnement vertical libre à l'aide dispositif d'entraînement (16) au-dessus d'un plateau de pesage (14), lorsque le conteneur vide (1) et le conteneur rempli de la poudre sont pesés, le capuchon métallique (15) est abaissé pour recouvrir le capuchon de manière à recouvrir le conteneur (1) placé sur le plateau de pesage et le plateau de pesage (14) lui-même.

6. Dispositif de remplissage selon l'une quelconque des revendications 1 à 5, dans lequel la première balance électronique (3) et la seconde balance électronique (5) délivrent chacune les données de pesage avec une limite de lecture d'approximativement 0,1 mg ou moins, et au maximum toutes les 0,2 seconde.

7. Dispositif de remplissage selon l'une quelconque des revendications 1 à6, comprenant en outre un dispositif de traitement de données (100) qui échantillonne les données de pesage normalement à délivrer depuis la première balance électronique (3) et la seconde balance électronique (5), qui compare la différence entre la valeur maximum et la valeur minimum du nombre continu donné des donnés échantillonnées avec une valeur stable prédéterminée de jugement d'anomalie de manière à délivrer en tant que valeur de pesage les données lorsque la différence est devenue égale ou inférieure à la plage de détection stable de jugement.

8. Dispositif de remplissage selon l'une quelconque des revendications 1 à 7, comprenant en outre un dispositif de traitement de données (105, 106) qui calcule la quantité de remplissage nette à partir de la valeur de pesage du conteneur vide par la première balance électronique (3) et la valeur de pesage du conteneur rempli par la seconde balance électronique (5), qui commande en rétroaction le pilotage du moteur (23) de la machine de remplissage à partir de la quantité de remplissage nette, de la quantité de remplissage de remplissage cible, et des données de pilotage du moteur de la machine de remplissage pendant l'opération de remplissage, et qui commande en rétroaction pour chacune des données concernant la durée précédente entre le temps initial et le temps final lorsqu'une variation importante existe pour la quantité de remplissage, et qui commande également en rétroaction à partir des données moyennes une pluralité de durées continues, comme par exemple cinq durées ou similaires, comprenant la durée précédente dans la période stable avec une variation inférieure de la quantité de remplissage entre la période initiale et la période finale.

9. Dispositif de remplissage selon l'une quelconque des revendications 1 à8, dans lequel une machine de remplissage à vis, qui comporte un boîtier extérieur (21) monté sur l'extrémité de l'embout du tunnel pour recevoir la poudre, comportant une vis (24) fixée sur l'arbre rotatif (40), accouplé au boîtier (21) de manière à distribuer la poudre de pesage en fonction de l'angle de rotation de la vis (24), est utilisée comme machine de remplissage.

10. Dispositif de remplissage selon la revendication 9, dans lequel un servomoteur (23) est utilisé en tant que moyen d'entraînement pour faire tourner une vis (24) via un arbre rotatif (40) de la machine de remplissage à vis, et en ce qu'il est prévu un mécanisme d'arrêt d'urgence pour la vis, pourvu d'un circuit de commande pour arrêter la rotation du servomoteur àun instant auquel la durée de détection donnée anormale s'est écoulée depuis le temps d'écoulement de la durée de détection donnée d'anomalie, en se basant sur le temps de rotation logique du servomoteur (23) nécessaire pour remplir la quantité donnée de poudre dans un conteneur.

11. Dispositif de remplissage selon l'une quelconque des revendications 1 à10, dans lequel l'appareil de rejet des produits défectueux (6, 7) comporte une partie concave (18a) pour recevoir un conteneur à des intervalles sur la partie périphérique extérieure d'une étoile d'avance (18) qui tourne dans une direction, un transporteur d'enlèvement (7) est prévu en raccordement sur le trajet de rotation de l'étoile d'avance (18), un obturateur (19) est prévu dans la partie de raccordement, un passage latéral de rejet (20) est prévu en raccordement dans la position en aval du trajet de rotation de l'étoile d'avance (18) depuis la position de montage de l'obturateur, et l'obturateur est fermé lorsque le signal de rejet d'un produit défectueux a été délivré, de manière à rejeter vers le passage de rejet un conteneur qui est dans la quantité de remplissage.

# Fig. 1

# Fig. 2

# Fig. 3

# Fig. 4

3a(5a)
14
3(5)
15
1

( vial placement ) → ( cap descent ) → ( stabilization ) → ( weighing ) → ( cap ascent ) → ( vial taken out )

# Fig. 6

4
1
27

( vial placement ) → ( holder ascent. ) → ( filling ) → ( filling compl. ) → ( holder descent ) → ( vial taken out )

EP 0 408 822 B1

# Fig. 5

# Fig. 7

# Fig. 8

EP 0 408 822 B1

$$Fig. \ 9$$

#1

$$1 \longrightarrow I$$
$$U \longrightarrow W_{MAX}$$
$$30000 \longrightarrow W_{MIN}$$
$$10 \longrightarrow n$$
$$0.1 \longrightarrow \varepsilon$$

#2  $I : n$   <

#3  *data shift*
$$W(I) \longrightarrow W(I-1)$$
$$W(I-1) \longrightarrow W(I-2)$$
$$W(2) \longrightarrow W(1)$$

#4  $sampling \rightarrow W(I)$

#5
*max. - value cal.*   $W(I) > W_{MAX} \Rightarrow W(I) \rightarrow W_{MAX}$
*min. - value cal.*   $W(I) < W_{MIN} \Rightarrow W(I) \rightarrow W_{MIN}$
*difference cal.*     $R = W_{MAX} - W_{MIN}$

#9  $I+1 \rightarrow I$

#6  $I : n$   <

#10  $0 \rightarrow I$

#7  $R : \varepsilon$   >

#8
$$\frac{I W(I)}{n} \rightarrow W$$

## Fig. 10

## Fig. 11

Fig. 12

Fig. 13

Fig. 14

Fig. 15